# EUROPÄISCHE PATENTSCHRIFT

(11) **EP 4 062 077 B1**
(45) Veröffentlichungstag und Bekanntmachung des Hinweises auf die Patenterteilung: **30.08.2023**
(21) Anmeldenummer: 20780629.0
(22) Anmeldetag: 23.09.2020
(51) Int. Cl.: F16C 17/22, F16C 33/10

(54) **KIPPSEGMENTLAGER**
TILTING PAD BEARING
PALIER À PATINS OSCILLANTS

(30) Priorität: 18.11.2019 DE 102019217696
(43) Veröffentlichungstag der Anmeldung: 28.09.2022
(73) Patentinhaber: Robert Bosch GmbH, 70442 Stuttgart (DE)
(72) Erfinder: LANG, Thomas, 70839 Gerlingen (DE)
(86) Internationale Anmeldenummer: PCT/EP2020/076563
(87) Internationale Veröffentlichungsnummer: WO 2021/099011

(56) Entgegenhaltungen:
- EP-A1- 3 324 062
- WO-A1-92/03667
- WO-A1-95/05547
- WO-A2-2014/120302
- US-A- 4 099 799
- US-A- 5 620 260
- US-A1- 2008 253 706

## Beschreibung

Die Erfindung betrifft ein Kippsegmentlager nach der Gattung des Anspruchs 1.

### Stand der Technik

Kippsegmentlager kommen vor allem als luftgeschmierte Kippsegmentlager bei der Lagerung von mit hohen Drehzahlen rotierenden Wellen zum Einsatz. Insbesondere bei Verdichtern für Brennstoffzellensystem, durch die der Brennstoffzelle Luft zugeführt wird, kommen derartige luftgeschmierte Kippsegmentlager zum Einsatz, da hier keine Ölschmierung möglich ist. Luftgeschmierte Kippsegmentlager bieten den Vorteil geringer Reibung und damit geringer Lagerverluste. Ein solches Kippsegmentlager ist durch die DE 10 2016 202 167 A1 bekannt. Dieses Kippsegmentlager weist mehrere Kippsegmente auf, zwischen denen die Welle gelagert ist. Die Kippsegmente sind jeweils um eine Schwenkachse verkippbar in einer als Lageraufnahme dienenden Lagerhülse gelagert. Die Lagerung der Kippsegmente erfolgt dabei über jeweils ein elastisches und/oder federndes Element zwischen der Lagerhülse und dem Kippsegment. Im Betrieb kommt es zu einer Erwärmung des Kippsegmentlagers wobei sich die Kippsegmente und die Welle ausdehnen, wodurch der Schmierspalt zwischen den Kippsegmenten und der Welle verringert wird. Durch die elastische bzw. federnde Abstützung der Kippsegmente ist zwar ein Ausgleich der thermischen Ausdehnungen ermöglicht, jedoch wird durch die federnde oder elastische Abstützung dennoch die Anpresskraft der Kippsegmente an die Welle und dadurch die Reibung im Kippsegmentlager erhöht.

Durch die WO 92/03667 A1 ist ein Kippsegmentlager mit mehreren über dessen Umfang verteilten Kippsegmenten bekannt, die zumindest mittelbar an einer Lageraufnahme um jeweils eine Schwenkachse schwenkbar gehalten sind. Jedes Kippsegment ist an jeweils einem Tragelement um die jeweilige Schwenkachse schwenkbar gehalten. Das jeweilige Tragelement ist nur in dessen der Schwenkachse des zugehörigen Kippsegments gegenüberliegendem Umfangsbereich über eine Verbindungsstelle mit der Lageraufnahme verbunden. Ein weiteres gattungsgemäßes Kippsegmentlager ist aus der US 4 099 799 A bekannt.

### Offenbarung der Erfindung

### Vorteile der Erfindung

Das erfindungsgemäße Kippsegmentlager mit den Merkmalen des Anspruchs 1 hat den Vorteil, dass bei thermischer Ausdehnung die Schwenkachse der Kippsegmente infolge der thermischen Ausdehnung der Tragelemente von der Längsachse des Kippsegmentlagers wegbewegt wird, so dass die thermische Ausdehnung der Kippsegmente nicht zu einer Verringerung des Schmierspalts führt. Die Funktion des Kippsegmentlagers bleibt somit auch bei dessen Erwärmung während des Betriebs erhalten, da der Schmierspalt nicht verringert und die Reibung nicht erhöht wird.

In den abhängigen Ansprüchen sind vorteilhafte Ausgestaltungen und Weiterbildungen der Erfindung angegeben.

In den Ansprüchen 2 und 3 sind einfache Ausführungen der Tragelemente angegeben. Durch die Ausbildung gemäß Anspruch 4 und 5 ist sichergestellt, dass die Tragelemente jeweils frei beweglich sind ohne sich gegenseitig zu beeinflussen.

### Zeichnung

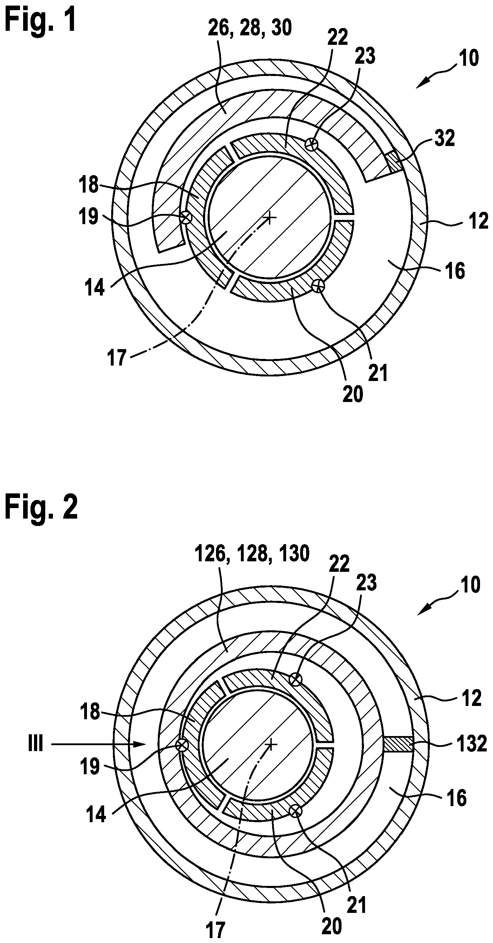

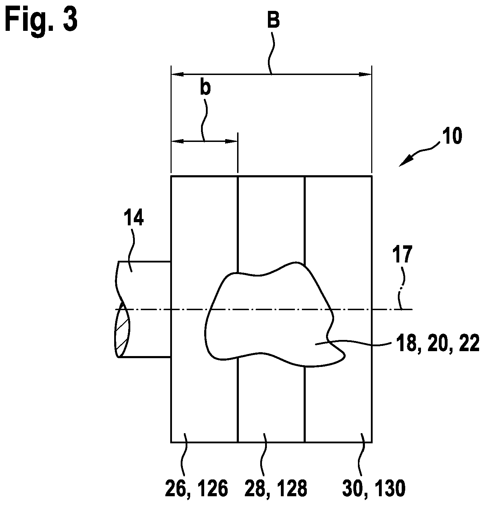

Zwei Ausführungsbeispiele der Erfindung sind in der Zeichnung dargestellt und in der nachfolgenden Beschreibung näher erläutert. Es zeigen Figur 1 ein Kippsegmentlager in einem Querschnitt mit einer Lageraufnahme und in dieser über Tragelemente gelagerte Kippsegmente gemäß einem ersten Ausführungsbeispiel, Figur 2 das Kippsegmentlager in einem Querschnitt gemäß einem zweiten Ausführungsbeispiel und Figur 3 das Kippsegmentlager in einer Seitenansicht in Pfeilrichtung III in Figur 2.

### Beschreibung der Ausführungsbeispiele

In den Figuren 1 bis 3 ist ein Kippsegmentlager 10 mit einer Lageraufnahme 12 dargestellt, die als Lagerhülse ausgebildet sein kann. Das Kippsegmentlager 10 dient zur Lagerung einer rotierenden Welle 14. Die Lagerhülse 12 hat im Wesentlichen die Gestalt eines geraden, hohlen Kreiszylinders mit einem Lagerinnenraum 16 und einer Längsachse 17. Im Lagerinnenraum 16 sind mehrere, beispielsweise drei Kippsegmente 18, 20 und 22 angeordnet, die gleichmäßig über den Umfang der Lageraufnahme 12 verteilt angeordnet sind. Es können auch mehr als drei Kippsegmente vorgesehen sein.

Die Kippsegmente 18, 20, 22 sind innerhalb des Lagerinnenraums 16 um jeweils eine Schwenkachse 19, 21, 23 kippbar gelagert, wobei die Schwenkachsen 19, 21, 23 jeweils zumindest annähernd parallel zur Längsachse 17 verlaufen, die auch die Drehachse der Welle 14 ist. Die Lage der Schwenkachsen 19, 21, 23 in Umfangsrichtung der Kippsegmente 18, 20, 22 kann in einem mittleren Umfangsbereich der Kippsegmente liegen oder zu diesem versetzt. Die Schwenkachsen 19, 21, 23 können durch einen Wälzkontakt, eine gelenkige Lagerung der Kippsegmente oder durch eine einstückige Verbindung der Kippsegmente über Stege mit geringem Querschnitt erfolgen, die elastisch verformbar sind um die Verkippung der Kippsegmente 18, 20, 22 zu ermöglichen.

Erfindungsgemäß ist jedes Kippsegment 18, 20, 22 im Bereich seiner Schwenkachse 19, 21, 23 an jeweils einem Tragelement 26, 28, 30 angelenkt. Für jedes Kippsegment 18, 20, 22 ist ein separates Tragelement 26, 28, 30 vorgesehen und die Tragelemente 26, 28, 30 weisen untereinander keine Verbindung auf. In den Figuren 1 und 2 ist dabei jeweils nur das Tragelement eines Kippsegments dargestellt, da die anderen Tragelemente nicht in der Zeichenebene angeordnet sind.

Bei einem in Figur 1 dargestellten ersten Ausführungsbeispiel sind die Tragelemente 26, 28, 30 bogenförmig, beispielsweise etwa halbkreisförmig ausgebildet. Vorzugsweise sind alle Tragelemente 26, 28, 30 identisch ausgebildet. Die Tragelemente 26, 28, 30 verlaufen radial außerhalb der Kippsegmente 18, 20, 22 zwischen diesen und der Lageraufnahme 12. Jedes Tragelement 26, 28, 30 ist auf seiner der jeweiligen Schwenkachse 19, 21, 23 in Umfangsrichtung gegenüberliegenden Seite über eine Verbindungsstelle 32 fest mit der Lageraufnahme 12 verbunden. Die Verbindungsstelle 32 liegt der jeweiligen Schwenkachse 19, 21, 23 vorzugsweise zumindest annähernd diametral gegenüber. Die jeweilige Verbindungsstelle 32 ist die einzige Verbindung der Tragelemente 26, 28, 30 mit der Lagerhülse 12 so dass der Bereich der Tragelemente 26, 28, 30 zwischen der Verbindungsstelle 32 und den Schwenkachsen 19, 21, 23 frei beweglich ist. Da die Kippsegmente 18, 20, 22 in Umfangsrichtung zueinander versetzt angeordnet sind, sind entsprechend auch die Tragelemente 26, 28, 30 und deren Verbindungsstellen 32 mit der Lageraufnahme 12 in Umfangsrichtung zueinander versetzt angeordnet. Um eine Kollision der Tragelemente 26, 28, 30 zu vermeiden und deren Beweglichkeit nicht zu behindern sind diese wie in Figur 3 dargestellt in Richtung der Längsachse 17 zueinander versetzt angeordnet. Die Breite b der Tragelemente 26, 28, 30 in Richtung der Längsachse 17 beträgt dabei jeweils etwas weniger als 1/3 der Breite B der Kippsegmente 18, 20, 22 in Richtung der Längsachse 17.

In Figur 2 ist das Kippsegmentlager 10 gemäß einem zweiten Ausführungsbeispiel dargestellt, bei dem der grundsätzliche Aufbau gleich ist wie beim ersten Ausführungsbeispiel, jedoch die Ausbildung der Tragelemente 126, 128, 130 anders ist. Die Tragelemente 126, 128, 130 gemäß dem zweiten Ausführungsbeispiel sind jeweils als geschlossener Ring ausgebildet, der die Kippsegmente 18, 20, 22 über deren gesamten Umfang umgibt. Die Tragelemente 126, 128, 130 sind auf ihrer der Schwenkachse 19, 21, 23 des zugehörigen Kippsegments 18, 20, 22 diametral gegenüberliegenden Umfangsseite über die Verbindungsstelle 132 mit der Lageraufnahme 12 verbunden. In Richtung der Längsachse 17 sind die Tragelemente 126, 128, 130 auch gemäß dem zweiten Ausführungsbeispiel nebeneinander angeordnet und weist jeweils eine Breite b von etwa 1/3 der Breite B der Kippsegmente 18, 20, 22 auf.

Bei Rotation der Welle 14 bildet sich zwischen dieser und den dieser zugewandten Innenseiten der Kippsegmente 18, 20, 22 ein Schmierspalt mit einem Gaspolster aus, durch das eine geringe Reibung erreicht wird. Bei Erwärmung der Welle 14 sowie der Komponenten des Kippsegmentlagers 10 dehnen sich diese aus. Bei Erwärmung der Tragelemente 26, 28, 30 bzw. 126, 128, 130 verschieben sich durch deren Ausdehnung die Schwenkachsen 19, 21, 23 der Kippsegmente 18, 20, 22 radial von der Längsachse 17 weg, da die Tragelemente 26, 28, 30 bzw. 126, 128, 130 an den Verbindungsstellen 32 bzw. 132 an der Lageraufnahme 12 gehalten sind. Durch diese Verschiebung der Schwenkachsen 19, 21, 23 werden die thermischen Ausdehnungen der Welle 14 und der Kippsegmente 18, 20, 22 zumindest teilweise ausgeglichen, so dass diese nicht zu einer Verringerung des Schmierspalts zwischen der Welle 14 und den Kippsegmenten 18, 20, 22 führen.

Die Welle 14, die im Kippsegmentlager 10 drehbar gelagert ist, gehört zum Beispiel zu einem (nicht dargestellten) Rotor einer Strömungsmaschine. Die Strömungsmaschine ist zum Beispiel Teil einer Luftversorgungseinheit in einem Brennstoffzellensystem. In dem Brennstoffzellensystem ist die Strömungsmaschine zum Beispiel als Verdichter ausgeführt. Der Verdichter umfasst ein Verdichterrad, das vorteilhafter Bestandteil des Rotors ist.

## Patentansprüche

1. Kippsegmentlager (10) mit mehreren über dessen Umfang verteilten Kippsegmenten (18, 20, 22), die zumindest mittelbar an einer Lageraufnahme (12) um jeweils eine Schwenkachse (19, 21, 23) schwenkbar gehalten sind, wobei jedes Kippsegment (18, 20, 22) an jeweils einem Tragelement (26, 28, 30; 126, 128, 130) um die jeweilige Schwenkachse (19, 21, 23) schwenkbar gehalten ist und das jeweilige Tragelement (26, 28, 30; 126, 128, 130) nur in dessen der Schwenkachse (19, 21, 23) des zugehörigen Kippsegments (16, 18, 20) gegenüberliegenden Umfangsbereich über eine Verbindungsstelle (32; 132) mit der Lageraufnahme (12) verbunden ist, **dadurch gekennzeichnet, dass** sich die Tragelemente (26, 28, 30; 126, 128, 130) bei Erwärmung derart verformen, dass sich der radiale Abstand der Schwenkachsen (19, 21, 23) der Kippsegmente (18, 20, 22) von der Längsachse (17) des Kippsegmentlagers (10) vergrößert.

2. Kippsegmentlager nach Anspruch 1, **dadurch gekennzeichnet, dass** die Tragelemente (26, 28, 30) die Kippsegmente (18, 20, 22) über einen Teil von deren Umfang bogenförmig umgeben.

3. Kippsegmentlager nach Anspruch 1, **dadurch gekennzeichnet, dass** die Tragelemente (126, 128, 130) als geschlossene Ringe ausgebildet sind, die die Kippsegmente (18, 20, 22) über deren gesamten Umfang umgeben.

4. Kippsegmentlager nach einem der Ansprüche 1 bis 3, **dadurch gekennzeichnet, dass** die Tragelemente (26, 28, 30; 126, 128, 130) in Richtung der Längsachse (17) des Kippsegmentlagers (10) zueinander versetzt angeordnet sind.

5. Kippsegmentlager nach Anspruch 4, **dadurch gekennzeichnet, dass** die Breite (b) der Tragelemente (26, 28, 30; 126, 128, 130) in Richtung der Längsachse (17) geringer ist als die Breite (B) der Kippsegmente (18, 20, 22) in Richtung der Längsachse (17).

6. Kippsegmentlager nach Anspruch 5, **dadurch gekennzeichnet, dass** die Breite (b) der Tragelemente (26, 28, 30; 126, 128, 130) zumindest annähernd die Breite (B) der Kippsegmente (18, 20, 22) geteilt durch n beträgt, wobei n die Anzahl der Kippsegmente (18, 20, 22) ist.

## Claims

1. Tilting pad bearing (10) with a plurality of tilting pads (18, 20, 22) which are distributed over its circumference and are held at least indirectly on a bearing seat (12) such that they can be pivoted about in each case one pivot axis (19, 21, 23), each tilting pad (18, 20, 22) being held on in each case one supporting element (26, 28, 30; 126, 128, 130) such that it can be pivoted about the respective pivot axis (19, 21, 23), and the respective supporting element (26, 28, 30; 126, 128, 130) being connected to the bearing seat (12) via a connecting point (32; 132) only in its circumferential region which lies opposite the pivot axis (19, 21, 23) of the associated tilting pad (16, 18, 20), **characterized in that** the supporting elements (26, 28, 30; 126, 128, 130) are deformed in the case of heating in such a way that the radial spacing of the pivot axes (19, 21, 23) of the tilting pads (18, 20, 22) from the longitudinal axis (17) of the tilting pad segment (10) increases.

2. Tilting pad bearing according to Claim 1, **characterized in that** the supporting elements (26, 28, 30) surround the tilting pads (18, 20, 22) in an arcuate manner over a part of the circumference.

3. Tilting pad bearing according to Claim 1, **characterized in that** the supporting elements (126, 128, 130) are configured as closed rings which surround the tilting pads (18, 20, 22) over their entire circumference.

4. Tilting pad bearing according to one of Claims 1 to 3, **characterized in that** the supporting elements (26, 28, 30; 126, 128, 130) are arranged offset with respect to one another in the direction of the longitudinal axis (17) of the tilting pad bearing (10).

5. Tilting pad bearing according to Claim 4, **characterized in that** the width (b) of the supporting elements (26, 28, 30; 126, 128, 130) in the direction of the longitudinal axis (17) is smaller than the width (B) of the tilting pads (18, 20, 22) in the direction of the longitudinal axis (17).

6. Tilting pad bearing according to Claim 5, **characterized in that** the width (b) of the supporting elements (26, 28, 30; 126, 128, 130) is at least approximately the width (B) of the tilting pads (18, 20, 22) divided by n, n being the number of tilting pads (18, 20, 22) .

## Revendications

1. Palier à patins basculants (10) comprenant une pluralité de patins basculants (18, 20, 22) qui sont répartis sur la périphérie dudit palier et qui sont maintenus au moins indirectement sur un logement de palier (12) de manière à pouvoir pivoter chacun sur un axe de pivotement (19, 21, 23), chaque patin basculant (18, 20, 22) étant maintenu sur un élément de support respectif (26, 28, 30 ; 126, 128, 130) de manière à pouvoir pivoter sur l'axe de pivotement respectif (19, 21, 23) et l'élément de support respectif (26, 28, 30 ; 126, 128, 130) étant relié au logement de palier (12) par le biais d'un point de liaison (32 ; 132) seulement dans la région périphérique dudit élément de support qui est opposée à l'axe de pivotement (19, 21, 23) du patin basculant associé (16, 18, 20), **caractérisé en ce que** les éléments de support (26, 28, 30 ; 126, 128, 130) se déforment lorsqu'ils sont chauffés de manière à augmenter la distance radiale entre les axes de pivotement (19, 21, 23) des patins basculants (18, 20, 22) et l'axe longitudinal (17) du palier à patins basculants (10).

2. Palier à patins basculants selon la revendication 1, **caractérisé en ce que** les éléments de support (26, 28, 30) entourent les patins basculants (18, 20, 22) en arc de cercle sur une partie de leur périphérie.

3. Palier à patins basculants selon la revendication 1, **caractérisé en ce que** les éléments de support (126, 128, 130) sont conçus sous la forme d'anneaux fermés qui entourent les patins basculants (18, 20, 22) sur toute leur périphérie.

4. Palier à patins basculants selon l'une des revendications 1 à 3, **caractérisé en ce que** les éléments de support (26, 28, 30 ; 126, 128, 130) sont disposés de manière décalée les uns par rapport aux autres dans la direction de l'axe longitudinal (17) du palier à patins basculants (10).

5. Palier à patins basculants selon la revendication 4, **caractérisé en ce que** la largeur (b) des éléments de support (26, 28, 30 ; 126, 128, 130) dans la direction de l'axe longitudinal (17) est inférieure à la largeur (B) des patins basculants (18, 20, 22) dans la direction de l'axe longitudinal (17).

6. Palier à patins basculants selon la revendication 5, **caractérisé en ce que** la largeur (b) des éléments de support (26, 28, 30 ; 126, 128, 130) est égale au moins approximativement à la largeur (B) des patins basculants (18, 20, 22) divisée par n, n étant le nombre de patins basculants (18, 20, 22).
